# EUROPEAN PATENT SPECIFICATION

(11) **EP 1 888 655 B1**
(45) Date of publication and mention of the grant of the patent: **09.12.2009**
(21) Application number: 06772812.1
(22) Date of filing: 09.06.2006
(51) Int. Cl.: C08F 14/18, C08L 27/12

(54) **AQUEOUS EMULSION POLYMERIZATION OF FLUORINATED MONOMERS IN THE PRESENCE OF A PARTIALLY FLUORINATED OLIGOMER AS AN EMULSIFIER**
WÄSSRIGE EMULSIONSPOLYMERISATION FLUORIERTER MONOMERE IN ANWESENHEIT EINES TEILWEISE FLUORIERTEN OLIGOMERS ALS EMULGATOR
POLYMERISATION SOUS EMULSION AQUEUSE DE MONOMERES FLUORES EN PRESENCE D'OLIGOMERE PARTIELLEMENT FLUORE COMME EMULSIFIANT

(30) Priority: 10.06.2005 GB 0511779
(43) Date of publication of application: 20.02.2008
(73) Proprietor: 3M Innovative Properties Company, St. Paul MN 55133-3427 (US)
(72) Inventor: HINTZER, Klaus, D-84504 Burgkirchen (DE); JUERGENS, Michael, D-84504 Burgkirchen (DE); KASPAR, Harald, D-84504 Burgkirchen (DE); LOCHHAAS, Kai Helmut, D-84504 Burgkirchen (DE); MAURER, Andreas R.,, D-84504 Burgkirchen (DE); ZIPPLIES, Tilman, D-84504 Brugkirchen (DE)
(74) Representative: Kurz, Arnd
(86) International application number: PCT/US2006/022650
(87) International publication number: WO 2006/135825

(56) References cited:
- EP-A- 1 614 731
- EP-A1- 0 712 882
- EP-A1- 1 127 896
- EP-A2- 1 334 996
- WO-A-02/095121
- WO-A-2004/067588
- WO-A-2005/121290
- US-A- 5 447 982

## Description

### Field of the invention

The present invention relates to the aqueous emulsion polymerization of fluorinated monomers to produce fluoropolymers.

### Background of the invention

Fluoropolymers, i.e. polymers having a fluorinated backbone, have been long known and have been used in a variety of applications because of several desirable properties such as heat resistance, chemical resistance, weatherability, UV-stability etc. The various fluoropolymers are for example described in "Modem Fluoropolymers", edited by John Scheirs, Wiley Science 1997. Commonly known or commercially employed fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF). Commercially employed fluoropolymers also include fluoroelastomers and thermoplastic fluoropolymers.

Several methods are known to produce fluoropolymers. Such methods include suspension polymerization as disclosed in e.g. U.S. Patent 3,855,191, U.S. Patent 4, 439,385 and EP 649863; aqueous: emulsion polymerization as disclosed in e. g. U.S. Patent 3,635,926 and U.S. Patent 4,262,101; solution polymerization as disclosed in U.S. Patent 3,642,742, U.S. Patent 4,588,796 and U.S. Patent 5,663,255; polymerization using supercritical CO₂ as disclosed in JP 46011031 and EP 964009 and polymerization in the gas phase as disclosed in U.S. Patent 4,861,845.

Currently, the most commonly employed polymerization methods include suspension polymerization and especially aqueous emulsion polymerization. The aqueous emulsion polymerization normally involves the polymerization in the presence of a fluorinated surfactant, which is generally used for the stabilization of the polymer particles formed. The suspension polymerization generally does not involve the use of surfactant but results in substantially larger polymer particles than in case of the aqueous emulsion polymerization. Thus, the polymer particles in case of suspension polymerization will quickly settle out whereas in case of dispersions obtained in emulsion polymerization generally good stability over a long period of time is obtained.

An aqueous emulsion polymerization wherein no surfactant is used has been described in U.S. Patent 5,453,477, WO 96/24622 and WO 97/17381 to generally produce homo- and copolymers of chlorotrifluoroethylene (CTFE). For example, WO 97/17381 discloses an aqueous emulsion polymerization in the absence of a surfactant wherein a radical initiator system of a reducing agent and oxidizing agent is used to initiate the polymerization and whereby the initiator system is added in one or more further charges during the polymerization. So-called emulsifier free polymerization has further been disclosed in WO 02/88206 and WO 02/88203. In the latter PCT application, the use of dimethyl ether or methyl tertiary butyl ether is taught to minimize formation of low molecular weight fractions that may be extractable from the fluoropolymer. WO 02/88207 teaches an emulsifier free polymerization using certain chain transfer agents to minimize formation of water soluble fluorinated compounds. An emulsifier free polymerization is further disclosed in RU 2158274 for making an elastomeric copolymer of hexafluoropropylene and vinylidene fluoride.

EP 1 334 996 discloses a way to prepare fluoropolymers by emulsion in the presence of a bifunctional perfluorinated surfactant.

### Summary of invention

The aqueous emulsion polymerization process in the presence of fluorinated surfactants is a desirable process to produce fluoropolymers because it can yield stable fluoropolymer particle dispersions in high yield and in a more environmental friendly way than for example polymerizations conducted in an organic solvent. Frequently, the emulsion polymerization process is carried out using a perfluoroalkanoic acid or salt thereof as a surfactant. These surfactants are typically used as they provide a wide variety of desirable properties such as high speed of polymerization, good copolymerization properties of fluorinated olefins with comonomers, small particle sizes of the resulting dispersion can be achieved, good polymerization yields i.e. a high amount of solids can be produced, good dispersion stability, etc. However, environmental concerns have been raised against these surfactants and moreover these surfactants are generally expensive. Accordingly, attempts have been made in the art to conduct the emulsion polymerization process without the use of a fluorinated surfactant as described above.

While the emulsifier free polymerizations disclosed in the art may solve the environmental problems associated with the use thereof, it has been found that emulsifier free polymerization may provide inferior results compared to polymerizations that employ a conventional emulsifier, in particular for making semicrystalline fluoropolymers, particularly of high molecular weight. Additionally, for making semicrystalline fluoropolymers and in particular those of high molecular weight, the emulsifier free polymerizations may not be economical and effective.

Also, it has been taught to recover the fluorinated surfactant from waste water streams and to remove them from the resulting dispersion after polymerization as disclosed in WO 99/62830, WO 99/62858 and WO 00/35971. The so recovered fluorinated surfactant can then be re-used in a subsequent polymerization. The recovery thus addresses the cost of the fluorinated surfactant and to some extent the environmental concern.

It would now be desirable to find an alternative emulsion polymerization process in which the use of perfluoroalkanoic acids and salts thereof as a fluorinated surfactant can be avoided. In particular, it would be desirable to find an alternative surfactant or dispersant. Desirably, such alternative surfactant or dispersant allows for a high polymerization rate, good dispersion stability, good yields, good copolymerization properties and/or the possibility of obtaining a wide variety of particle sizes including small particle sizes. The properties of the resulting fluoropolymer should generally not be negatively influenced and preferably would be improved. It would further be desirable that the polymerization can be carried out in a convenient and cost effective way, preferably using equipment commonly used in the aqueous emulsion polymerization of fluorinated monomers. Additionally, it may be desirable to recover the alternative surfactant or dispersant from waste water streams and/or to remove or recover the surfactant from the dispersion subsequent to the polymerization. Desirably, such recover can proceed in an easy, convenient and cost effective way. It would furthermore be desirable to find a process for making semicrystalline fluoropolymers, in particular those of high molecular weight.

It has been found that oligomers having one or more ionic groups and having a partially fluorinated backbone and a number average molecular weight of not more than 2000 g/mol can be used as an effective dispersant or emulsifier in the aqueous emulsion polymerization of fluorinated monomers. In particular, the oligomer can be used instead of the frequently used perfluoroalkanoic acids or salts thereof.

By the term 'oligomer' as used in connection with the present invention is meant a low molecular weight compound that comprises repeating units deriving from one or more monomers. Accordingly, the term oligomer is intended to include telomers. Likewise, the terms oligomerization and polymerization in respect of preparing the oligomers are intended to include telomerization.

The oligomer can be conveniently obtained by the polymerization of one or more partially fluorinated monomers or through a copolymerization of a perfluorinated monomer with a non-fluorinated monomer or partially fluorinated monomer.

Thus, in one aspect, the present invention relates to a method for making a fluoropolymer comprising an aqueous emulsion polymerization of one or more fluorinated monomers wherein said aqueous emulsion polymerization is carried out in the presence of an oligomer that comprises one or more ionic groups, has a partially fluorinated backbone, a number average molecular weight of not more than 2000 g/mol and that has a combination of repeating units different from that of the fluoropolymer that is being produced by the polymerization of said one or more fluorinated monomers.

Since the polymerization of the one or more fluorinated monomers to produce the desired fluoropolymer is carried out in the presence of the oligomer, the resulting dispersion will contain the oligomer in addition to the fluoropolymer. Thus, in a further aspect, the invention relates to an aqueous dispersion of a fluoropolymer comprising an oligomer that comprises one ore more ionic groups, has a partially fluorinated backbone, a number average molecular weight of not more than 2000 g/mol, and has a combination of repeating units that is different from that of the fluoropolymer.

Since the aqueous emulsion polymerization can be carried out without the need for using a perfluoroalkanoic acid, dispersions can be readily obtained that are free of such perfluoroalkanoic acids or salts thereof. Thus, in a further aspect, the present invention relates to an aqueous dispersion of a fluoropolymer comprising the oligomer and wherein the aqueous dispersion is free of perfluorinated alkanoic acids or salts thereof.

The resulting dispersions can be used in a variety of applications including coating and impregnation of substrates. Generally, a non-ionic surfactant should be added to the dispersion for such applications. Accordingly, the invention in a further aspect relates to aqueous dispersion of a fluoropolymer comprising the oligomer and additionally comprising a non-ionic surfactant, typically in an amount of 1 to 12% by weight based on the weight of fluoropolymer solids.

### Detailed description of the invention

In accordance with the present invention, an oligomer having a partially fluorinated backbone and one or more ionic groups is used as a dispersant or emulsifier in the aqueous emulsion polymerization process of fluorinated monomers including fluorinated olefins. The oligomer typically has a number average molecular weight of not more than 2000 g/mol. For example, the molecular weight of the oligomer can be 2000 g/mol or less, or 1500 g/mol or less or 1000 g/mol or less. Generally, the number average molecular weight of the oligomer will be between 200 g/mol and 1500 g/mol. Conveniently, the number average molecular weight of the oligomer is between 300 g/mol and 1000 g/mol. Generally with a lower molecular weight, the number of ionic groups, in particular ionic end groups, per unit mass will be higher than for a higher molecular weight, all other factors being equal. Accordingly, lower molecular weight oligomers may provide advantages over higher molecular weight oligomers in the polymerization process and may provide higher dispersion stability. Also, lower molecular weight oligomers may be more easily recoverable through a process in which an aqueous mixture containing the oligomer are contacted with an anion exchange resin.

The oligomer has one or more ionic end groups. Suitable ionic groups include acid groups and their salts such as for example carboxylic acids and their salts, sulphonic acids and their salts, phosphonic acids and their salts or sulfuric acid and salts thereof. The ionic groups are typically contained in one or both of the end groups of the oligomer but alternatively and/or additionally may be comprised in repeating units of the oligomer. The number of ionic groups in the oligomer should typically be at least 1 per oligomer chain. Typically the average number of ionic groups per oligomer chain will be between 1 and 2.

The oligomer used in connection with the invention has a partially fluorinated backbone, i.e. the amount of fluorine on the backbone is typically at least 20% by weight, preferably at least 30% by weight and most preferably at least 50% by weight. Typically, the oligomer will have a fluorine to carbon ratio (number of fluorine atoms per carbon atom in the backbone) of least 1:2. Frequently, an oligomer having a fluorine to carbon ratio of at least 0.5:1, for example between 1:1 and 1.9:1 or between 1.2:1 and 1.8:1 is used. The oligomer can be readily obtained by a free radical oligomerization of one or more partially fluorinated monomers optionally in the presence of a chain transfer agent to obtain the desired molecular weight. The free radical oligomerization may further involve one or more co-monomers including perfluorinated monomers and non-fluorinated monomers. Alternatively, the partially fluorinated backbone of the oligomer may be obtained by oligomerizing one or more perfluorinated monomers with one or more non-fluorinated monomers, i.e. monomers having an ethylenically unsaturated bond that has only hydrogen atoms on the carbon atoms of the ethylenically unsaturated bond.

The ionic groups in the oligomer may be introduced therein through the use of a comonomer that comprises the ionic group or a precursor thereof that may be converted in an ionic group. Examples of such comonomers include comonomers that correspond to the general formula:

CF₂=CF-(-CFX)ₛ-(OCF₂CFY)ₜ(O)ₕ-(CFY')ᵤ-A (I)

wherein s is 0 or 1, t is 0 to 3; h is 0 to 1; u is 0 to 12; X represents -F, -Cl or -CF₃; Y and Y' independently represent -F or a C₁₋₁₀ perfluoralkyl group; A represents an ionic group or a precursor thereof such as -CN, -COF, -COOH, -COOR, -COOM, or - COONRR', -SO₂F, -SO₃M, -SO₃H, -PO₃H₂, -PO₃RR', -PO₃M₂; M represents an alkali metal ion or a quarternary ammonium group; R and R' represent a hydrocarbon group such as e.g. a C ₁₋₁₀ alkyl group and R and R' may be the same or different.

According to a further embodiment, the comonomer for introducing an ionic group in the oligomer corresponds to the general formula:

CF₂=CF-O-R_{f}-Z (II)

wherein R_{f} represents a perfluoroalkylene group optionally interrupted by one or more oxygen atoms and Z represents a carboxylic acid group, a salt thereof or a precursor thereof such as an ester of the formula COOR wherein R represents a hydrocarbon group such as an alkyl group or an aryl group, or a sulfonic acid group, a salt thereof or a precursor thereof such as SO₂F. In one embodiment, R_{f} represents a perfluoroalkylene group having between 2 and 8 carbon atoms. Alternatively, R_{f} may be a perfluoroether group e.g. corresponding to the formula A or B:

-(CF₂)ₙ(O(CF₂)ₓ)ₘ(CF₂)ₖ- (A)

wherein n is an integer of 1 to 6, x is an integer of 1 to 5, m is an integer of 1 to 4 and k is an integer of 0 to 6;

-[CF₂CF(CF₃)O]ₚ-(CF₂)_{q}-

wherein p is in an integer of 1 to 3 and q is an integer of 2 to 4.

When a co-monomer according to formula (II) is used, the resulting repeating units would correspond to the following formula:

-CF₂-CF-O-Rf-G

wherein Rf represents a perfluoroalkylene group optionally interrupted by one or more oxygen atoms and G represents a carboxylic acid group or a salt thereof or a sulfonic acid group or a salt thereof and wherein the open valences indicate the linkage of the repeating unit to other repeating units in the polymer chain.

Specific examples of comonomers for introducing an ionic group in the oligomer include:

CF₂=CF-O-(CF₂)₂-SO₂F

CF₂=CF-O-(CF₂)₃-SO₂F

CF₂=CF-O-(CF₂)₃-COOCH₃

CF₂=CF-O-CF₂CF(CF₃)-O-(CF₂)₂-COOCH₃

CF₂=CF-O-CF₂CF(CF₃)-O-(CF₂)₃-COOCH₃

CF₂=CF-O-[CF₂CF(CF₃)-O]₂-(CF₂)₂-COOCH₃

CF₂=CF-O-CF₂CF(CF₃)-O-(CF₂)₂-SO₂F

CF₂=CF-O-[CF₂CF(CF₃)-O]₂-(CF₂)₂-SO₂F

CF₂=CF-O-(CF₂)₄-SO₂F

Conveniently however, the ionic groups are introduced in the end group or groups of the oligomer. Such ionic end groups in the oligomer can be obtained as a result of the initiator used, through the chain transfer agent used and/or by subsequently converting end groups formed during the oligomerization into an ionic end group. It is of course also contemplated in the invention to introduce ionic groups in the end group(s) as well as along the backbone of the oligomer.

In one embodiment for making the oligomer, the desired monomers for obtaining an oligomer with a partially fluorinated backbone are oligomerized in the presence of a iodine containing organic compound as a chain transfer agent. Suitable iodine containing organic compounds include fluorinated iodine containing compounds of the general formula (CₙF₂ₙ₊₁)-I and I-(CₙF₂ₙ)-I wherein n is an integer of 1 to 8. Subsequent to the oligomerization, the iodine containing end groups can be converted into carboxylic acid groups or salts thereof by oxidization using for example oleum (H₂SO₄/SO₃), permanganate or chromic acid. In an alternative embodiment, an alcohol such as methanol may be used as a chain transfer agent. This will typically result in hydroxyl groups in the end groups of the oligomer. These may also be converted to carboxylic acid groups and/or their salts through oxidation.

A variety of further useful chain transfer agents can be used, which generate end groups which can be converted into ionic groups. Examples of such further chain transfer agents include H-P(O)(OEt)₂ and disulphides. Still further suitable chain transfer agents and methods for producing the oligomers can be found in "Well-Architectured Fluoropolymers: Synthesis, Properties and Applications", Bruno Ameduri and Bernard Boutevin, Elsevier 2004. The amount of chain transfer agents for producing the desired oligomers depends on such factors as the reaction conditions and the nature of the chain transfer agent and can be easily determined by routine experimentation.

Also, the ionic groups may be introduced into the oligomer through the use of an appropriate initiator or initiator system. In this case, depending on the amount of initiator used and polymerization conditions, no chain transfer agent may be needed or a chain transfer agent may be used that does not necessarily result in an ionic end group or precursor thereof. Suitable chain transfer agents that do not introduce an ionic end group include for example gaseous alkanes such as ethane and propane, ethers such as dimethyl ether and methyl tertiary butyl ether.

Initiators that may be used to initiate the free radical oligomerization of the monomers for producing the oligomer include any of the initiators known for initiating a free radical polymerization of fluorinated monomers. Suitable initiators include peroxides and azo compounds and redox based initiators. Specific examples of peroxide initiators include, hydrogen peroxide, sodium or barium peroxide, diacylperoxides such as diacetylperoxide, disuccinyl peroxide, dipropionylperoxide, dibutyrylperoxide, dibenzoylperoxide, benzoylacetylperoxide, diglutaric acid peroxide and dilaurylperoxide, and further per-acids and salts thereof such as e.g. ammonium, sodium or potassium salts. Examples of per-acids include peracetic acid. Esters of the peracid can be used as well and examples thereof include tert.-butylperoxyacetate and tert.-butylperoxypivalate. Examples of initiators that can be used to generate ionic end groups in the oligomer include for example ammonium- alkali- or earth alkali salts of persulfates, permanganic or manganic acid or manganic acids. A persulfate initiator, e.g. ammonium persulfate (APS), can be used on its own or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include sodium formaldehyde sulfoxylate (Rongalit®) or fluoroalkyl sulfinates as disclosed in U.S. Patent 5,285,002. The reducing agent typically reduces the half-life time of the persulfate initiator. Additionally, a metal salt catalyst such as for example copper, iron or silver salts may be added. The amount of initiator may vary widely and may be selected so as to obtain the desired molecular weight of the oligomer in the presence or absence of a chain transfer agent. For example, the amount of initiator may be between 0.01% by weight (based on the oligomer produced) and 1000% by weight.

The oligomers can be produced by use of the described chain transfer agents and initiator systems either in aqueous media or in solvent based systems. Suitable solvent systems include for example methyl acetate, acetonitrile and mixtures of acetonitrile and a fluorinated liquid. For example, Saint-Loup et al. in Macromolecules 2002, 35, 1524 - 1536 describe the oligomerization of vinylidene fluoride, hexafluoropropene and chlorotrifluoroethylene in the aforementioned solvents. Further, Duc et al. in Macromol. Chem. Phys., 199, 1271-1289 (1998) describes the telomerization of vinylidene fluoride in methanol using di-tert-butyl peroxide.

In a particular embodiment, the oligomer is produced by polymerization in aqueous medium of the appropriate monomers. While such polymerization may be carried out using the addition of a fluorinated surfactant it will be preferred to carry out the polymerization without the addition of a fluorinated surfactant to avoid the need for subsequent removal of the fluorinated surfactant. Such emulsifier free polymerizations may be carried out as disclosed in for example U.S. Patent 5,453,477, WO 96/24622, WO 97/17381 and WO 02/88206. If a fluorinated surfactant is used, it will generally be preferred to use a perfluoroalkanoic acid or salt thereof such ammonium perfluorooctanoic acids. Such surfactants can be readily removed from the oligomer through for example steam distillation.

The oligomer may be separated from the resulting mixture by a number of the known separation techniques including for example extraction, precipitation or coagulation. The oligomers may further also be recovered through distillation for example by first converting any ionic groups into an ester. Subsequent to the distillation the oligomer may be obtained by hydrolyzing the ester back into the acid form or into the salt form. Furthermore, the oligomer may be separated from the reaction mixture by adsorbing it on adsorbent particles such as active carbon or by binding the oligomer to an anion exchange resin. Subsequently, the oligomer may then be eluted from the anion exchange resin or adsorbent particles.

The oligomerization typically results in a mixture of oligomers with different chain lengths. If desired, the mixture may be fractionated to obtain an oligomer mixture with a desired average molecular weight and distribution.

In an alternative embodiment, the oligomer may be used after its preparation without first separating the oligomer from the resulting reaction mixture. In particular, when the oligomer is produced in aqueous medium, the resulting aqueous mixture may be used as such to initiate the polymerization of one or more fluorinated monomers. If necessary or desired, the resulting aqueous oligomer mixture may be first diluted or upconcentrated to obtain a desired concentration of the oligomer therein.

In a still further embodiment, the oligomer may be produced in the polymerization reaction vessel before the start of the aqueous emulsion polymerization to produce the desired fluoropolymer. Accordingly, the constituting monomers for making the oligomer may be polymerized in the aqueous medium using appropriate amounts of initiator, chain transfer agent if appropriate and feed of monomers to produce the oligomer in the reaction vessel. Immediately following the production of the oligomer, the aqueous emulsion polymerization of the fluorinated monomers necessary to produce the desired fluoropolymer may be started by feeding the appropriate amount and mixture of the fluorinated monomers for making the desired fluoropolymer.

Oligomers having ionic end groups can also be prepared by irradiating a partially fluorinated polymer with electron beam in the presence of oxygen or air. For example a polymer of vinylidene fluoride may be irradiated with electron beam into a corresponding oligomer with desired molecular weight and having ionic end groups.

The oligomer has a partially fluorinated backbone which may be obtained through the oligomerization of one or more partially fluorinated monomers, i.e. monomers that have an ethylenically unsaturated group that has hydrogen and fluorine atoms on the carbons of the ethylenic unsaturation. In one embodiment, the partially fluorinated monomer corresponds to the general formula:

CX₂=CXY (III)

wherein each independent X represents H, F or CF₃, Y represents H, F or a perfluorinated hydrocarbon group that may have one or more oxygen atoms, with the proviso that at least one X or Y represents H and at least one X or Y represents F. Examples of monomers according to the above general formula (III) include vinyl fluoride, vinylidene fluoride (VDF) and trifluoroethylene.

The one or more partially fluorinated monomers may be copolymerized with one or more comonomers. Examples of suitable co-monomers include perfluorinated monomers such as tetrafluoroethylene (TFE), chlorotrifluoroethylene, hexafluoropropylene, perfluorinated vinyl ethers such as perfluoromethyl vinyl ether, perfluorinated allyl ethers and non-fluorinated monomers such as ethylene (E) and propylene (P). In a further embodiment, the oligomer may be derived from a combination of one or more perfluorinated monomers and one or more non-fluorinated monomers such as ethylene and propylene. Specific examples of oligomers that may be used include those derived from the oligomerization of VDF or from a combination of VDF and TFE. Further useful oligomers include those that have a combination of repeating units deriving from TFE and E or TFE and P or HFP and E.

Specific examples of oligomers or salts thereof that can be used include:

CF₃(VDF)ⱼ-CH₂-COOH

HO-(VDF)ₚ(HFP)_{q}-COOH

CF₃-(TFE)ₚ(VDF)_{q}-CF₂-COOH

H-(TFE)ₚ-(VDF)_{q}-OSO₃H

H-(TFE)ₚ-(VDF)_{q}-CF₂-COOH

wherein each of j, p and q represents the average number of repeating units derived from the respective monomer. Typical values for each of p and q are between 1 and 10 and typical values for j are between 2 and 20, for example between 2 and 10.

In accordance with the present invention, the oligomer is used in the aqueous emulsion polymerization of one or more fluorinated monomers, in particular gaseous fluorinated monomers. By gaseous fluorinated monomers is meant monomers that are present as a gas under the polymerization conditions. In a particular embodiment, the polymerization of the fluorinated monomers is started in the presence of the oligomer, i.e. the polymerization is initiated in the presence of the oligomer. The amount of oligomer used may vary depending on desired properties such as amount of solids and particle size. Generally the amount of oligomer will be between 0.01 % by weight based on the weight of water in the polymerization and 5% by weight, for example between 0.05% by weight and 2% by weight. A practical range is between 0.05% by weight and 1% by weight. While the polymerization is initiated in the presence of the oligomer, it is not excluded to add further oligomer during the polymerization although such will generally not be necessary. Nevertheless, it may be desirable to add certain monomer to the polymerization in the form of an aqueous emulsion. For example, fluorinated monomers and in particular perfluorinated co-monomers that are liquid under the polymerization conditions may be advantageously added in the form of an aqueous emulsion. Such emulsion of such co-monomers is preferably prepared using the oligomer as an emulsifier.

Examples of fluorinated monomers that may be polymerized using the oligomer as an emulsifier include partially or fully fluorinated gaseous monomers including olefins such as tetrafluoroethylene, chlorotrifluoroethylene, hexafluoropropylene, vinyl fluoride, vinylidene fluoride, partially or fully fluorinated allyl ethers and partially or fully fluorinated vinyl ethers. The polymerization may further involve non-fluorinated monomers such as ethylene and propylene.

Further examples of fluorinated monomers that may be used in the aqueous emulsion polymerization according to the invention include those corresponding to the formula:

CF₂=CF-O-R_{f} (IV)

wherein R_{f} represents a perfluorinated aliphatic group that may contain one or more oxygen atoms. Preferably, the perfluorovinyl ethers correspond to the general formula:

CF₂=CFO(R_{f}O)ₙ (R'_{f}O)ₘR"_{f} (V)

wherein R_{f} and R'_{f} are different linear or branched perfluoroalkylene groups of 2-6 carbon atoms, m and n are independently 0-10, and R"_{f} is a perfluoroalkyl group of 1-6 carbon atoms. Examples of perfluorovinyl ethers according to the above formulas include perfluoro-2-propoxypropylvinyl ether (PPVE-2), perfluoro-3-methoxy-n-propylvinyl ether, perfluoro-2-methoxy-ethylvinyl ether, perfluoromethylvinyl ether (PMVE), perfluoro-n-propylvinyl ether (PPVE-1) and

CF₃-(CF₂)₂-O-CF(CF₃)-CF₂-O-CF(CF₃)-CF₂-O-CF=CF₂.

Still further, the polymerization may involve comonomers that have a functional group such as for example a group capable of participating in a peroxide cure reaction. Such functional groups include halogens such as Br or I as well as nitrile groups. Specific examples of such comonomers that may be listed here include
(a) bromo- or iodo- (per)fluoroalkyl-(per)fluorovinylethers having the formula:

   Z-R_{f}-O-CX=CX₂

   wherein each X may be the same or different and represents H or F, Z is Br or I, R_{f} is a (per)fluoroalkylene C₁-C₁₂, optionally containing chlorine and/or ether oxygen atoms; for example: BrCF₂-O-CF=CF₂, BrCF₂CF₂-O-CF=CF₂, BrCF₂CF₂CF₂-O-CF=CF₂, and CF₃CFBrCF₂-O-CF=CF₂; and
(b) bromo- or iodo containing fluoroolefins such as those having the formula:

   Z'-(R_{f}')ᵣ-CX=CX₂,
wherein each X independently represents H or F, Z' is Br or I, R_{f}' is a perfluoroalkylene C₁-C₁₂, optionally containing chlorine atoms and r is 0 or 1; for instance: bromotrifluoroethylene, 4-bromo-perfluorobutene-1, and the like; or bromofluoroolefins such as 1-bromo-2,2-difluoroethylene and 4-bromo-3,3,4,4-tetrafluorobutene-1. Examples of nitrile containing monomers that may be used include those that correspond to one of the following formulas:

CF₂=CF-CF₂-O-R_{f}-CN

CF₂=CFO(CF₂)_{L}CN

CF₂=CFO[CF₂CF(CF₃)O]g(CF₂)ᵥOCF(CF₃)CN

CF₂=CF[OCF₂CF(CF₃)]ₖO(CF₂)ᵤCN

wherein L represents an integer of 2 to 12; g represents an integer of 0 to 4; k represents 1 or 2; v represents an integer of 0 to 6; u represents an integer of 1 to 6, R_{f} is a perfluoroalkylene or a bivalent perfluoroether group. Specific examples of nitrile containing liquid fluorinated monomers include perfluoro(8-cyano-5-methyl-3,6-dioxa-1-octene), CF₂=CFO(CF₂)₅CN, and CF₂=CFO(CF₂)₃OCF(CF₃)CN.

In accordance with a particular embodiment, a fluorinated liquid may be added to the polymerization system. By the term 'liquid' is meant that the compound should be liquid at the conditions of temperature and pressure employed in the polymerization process. Typically the fluorinated liquid has a boiling point of at least 50°C, preferably at least 80°C at atmospheric pressure. Fluorinated liquids include in particular highly fluorinated hydrocarbons as well as liquid fluorinated monomers. The term 'highly fluorinated' in connection with the present invention is used to indicate compounds in which most and preferably all hydrogen atoms have been replaced with fluorine atoms as well as compounds wherein the majority of hydrogen atoms have been replaced with fluorine atoms and where most or all of the remainder of the hydrogen atoms has been replaced with bromine, chlorine or iodine. Typically, a highly fluorinated compound in connection with this invention will have only few, e.g., 1 or 2 hydrogen atoms replaced by a halogen other than fluorine and/or have only one or two hydrogen atoms remaining. When not all hydrogen atoms are replaced by fluorine or another halogen, i.e., the compound is not perfluorinated, the hydrogen atoms should generally be in a position on the compound such that substantially no chain transfer thereto occurs, i.e., such that the compound acts as an inert in the polymerization, i.e., the compound does not participate in the free radical polymerization. Compounds in which all hydrogens have been replaced by fluorine and/or other halogen atoms are herein referred to as 'perfluorinated'. Liquid and fluorinated hydrocarbon compounds that can be used as fluorinated liquid, typically comprise between 3 and 25 carbon atoms, preferably between 5 and 20 carbon atoms and may contain up to 2 heteroatoms selected from oxygen, sulfur or nitrogen. Preferably the highly fluorinated hydrocarbon compound is a perfluorinated hydrocarbon compound. Suitable perfluorinated hydrocarbons include perfluorinated saturated linear, branched and/or cyclic aliphatic compounds such as a perfluorinated linear, branched or cyclic alkane; a perfluorinated aromatic compound such as perfluorinated benzene, or perfluorinated tetradecahydro phenanthene. It can also be a perfluorinated alkyl amine such as a perfluorinated trialkyl amine. It can further be a perfluorinated cyclic aliphatic, such as decalin; and preferably a heterocyclic aliphatic compound containing oxygen or sulfur in the ring, such as perfluoro-2-butyl tetrahydrofuran.

Specific examples of perfluorinated hydrocarbons include perfluoro-2-butyltetrahydrofuran, perfluorodecalin, perfluoromethyldecalin, perfluoromethylcyclohexane, perfluoro(1,3-dimethylcyclohexane), perfluorodimethyldecahydronaphthalene, perfluorofluorene, perfluoro(tetradecahydrophenanthrene), perfluorotetracosane, perfluorokerosenes, octafluoronaphthalene, oligomers of poly(chlorotrifluoroethylene), perfluoro(trialkylamine) such as perfluoro(tripropylamine), perfluoro(tributylamine), or perfluoro(tripentylamine), and octafluorotoluene, hexafluorobenzene, and commercial fluorinated solvents, such as Fluorinert FC-75, FC-72, FC-84, FC-77, FC-40, FC-43, FC-70, FC 5312 or FZ 348 all produced by 3M Company. A suitable inert liquid and highly fluorinated hydrocarbon compound is

C₃F₇-O-CF(CF₃)-CF₂-O-CHF-CF₃.

The fluorinated liquid may also comprise liquid fluorinated monomer alone or in combination with above described liquid fluorinated compounds. Examples of liquid fluorinated monomers include monomers that are liquid under the polymerization conditions and that are selected from (per)fluorinated vinyl ethers, (per)fluorinated allyl ethers and (per)fluorinated alkyl vinyl monomers.

When a fluorinated liquid is used, it will generally be preferred to emulsify the fluorinated liquid. Preferably, the fluorinated liquid is emulsified using the oligomer. Also, when a fluorinated liquid is used in the polymerization, it will be advantageous that at least a portion thereof or all is provided at the start of the polymerization such that the polymerization is initiated in the presence of the emulsified fluorinated liquid. The use of the fluorinated liquid may improve such properties as the rate of polymerization, incorporation of co-monomers and may reduce the particle size and/or improve the amount of solids that can be obtained at the end of the polymerization.

According to a still further embodiment, the fluorinated oligomers may be used to emulsify a perfluorinated ether as described in U.S. Patent 4 789 717. The thus obtained emulsion or micro-emulsion may be used in the initiation of the polymerization of one or more fluorinated monomers to produce a desired fluoropolymer.

The aqueous emulsion polymerization may be carried out at a temperatures between 10 to 100°C, preferably 30°C to 80°C and the pressure is typically between 2 and 30 bar, in particular 5 to 20 bar. The aqueous emulsion polymerization is typically initiated by an initiator such as for example an initiator disclosed above in connection with the preparation of the oligomer. The reaction temperature may be varied during the polymerization to influence the molecular weight distribution, i.e., to obtain a broad molecular weight distribution or to obtain a bimodal distribution. The aqueous emulsion polymerization system may further comprise other materials, such as buffers and, if desired, complex-formers or chain-transfer agents.

The aqueous emulsion polymerization may be used to produce a variety of fluoropolymers including perfluoropolymers, which have a fully fluorinated backbone, as well as partially fluorinated fluoropolymers. Also the aqueous emulsion polymerization may result in melt-processible fluoropolymers as well as those that are not melt-processible such as for example polytetrafluoroethylene and so-called modified polytetrafluoroethylene. The polymerization process can further yield fluoropolymers that can be cured to make fluoroelastomers as well as fluorothermoplasts. Fluorothermoplasts are generally fluoropolymers that have a distinct and well noticeable melting point, typically in the range of 60 to 340°C or between 100 and 320°C. They thus have a substantial crystalline phase. Fluoropolymers that are used for making fluoroelastomers typically are amorphous and/or have a neglectable amount of crystallinity such that no or hardly any melting point is discernable for these fluoropolymers.

Also, the aqueous emulsion polymerization process can be readily and effectively used to produce fluoropolymers of high molecular weight. For example, the polymerization may be used to produce fluoropolymers having an Melt Flow Index measured as set out in the examples of 100 g/10 min. or less, for example between 0.001 and 100, such as between 0.01 and 80. In particular the present process allows for making semicrystalline fluoropolymers of high molecular weight.

The aqueous emulsion polymerization results in a dispersion of the fluoropolymer in water. Generally the amount of solids of the fluoropolymer in the dispersion directly resulting from the polymerization will vary between 3 % by weight and about 40% by weight depending on the polymerization conditions. A typical range is between 5 and 30% by weight. The particle size (volume average particle size) of the fluoropolymer is typically between 50nm and 350nm with a typical particle size being between 100nm and about 300nm.

The fluoropolymer may be isolated from the dispersion by coagulation if a polymer in solid form is desired. Also, depending on the requirements of the application in which the fluoropolymer is to be used, the fluoropolymer may be post-fluorinated so as to convert any thermally unstable end groups into stable CF₃ end groups and/or to perfluorinate any oligomer that may have been coagulated with the fluoropolymer. Alternatively, the oligomer may be removed from the dispersion before coagulating and separating the fluoropolymer from the dispersion. The fluoropolymer may be post-fluorinated as described in for example EP 222945. Generally, the fluoropolymer will be post fluorinated such that the amount of end groups in the fluoropolymer other than CF₃ is less than 80 per million carbon atoms.

For coating applications however, an aqueous dispersion of the fluoropolymer is desired and hence the fluoropolymer will not need to be separated or coagulated from the dispersion. To obtain a fluoropolymer dispersion suitable for use in coating applications such as for example in the impregnation of fabrics or in the coating of metal substrates to make for example cookware, it will generally be desired to add further stabilizing surfactants and/or to further increase the fluoropolymer solids. For example, non-ionic stabilizing surfactants may be added to the fluoropolymer dispersion. Typically these will be added thereto in an amount of 1 to 12 % by weight based on fluoropolymer solids.

Examples of non-ionic surfactants that may be added include

R¹-O-[CH₂CH₂O]ₙ-[R²O]ₘ-R³ (VI)

wherein R¹ represents an aromatic or aliphatic hydrocarbon group having at least 8 carbon atoms, R² represents an alkylene having 3 carbon atoms, R³ represents hydrogen or a C₁-C₃ alkyl group, n has a value of 0 to 40, m has a value of 0 to 40 and the sum of n+m being at least 2. It will be understood that in the above formula (VI), the units indexed by n and m may appear as blocks or they may be present in an alternating or random configuration. Examples of non-ionic surfactants according to formula (VI) above include alkylphenol oxy ethylates such as ethoxylated p-isooctylphenol commercially available under the brand name TRITON™ such as for example TRITON™ X 100 wherein the number of ethoxy units is about 10 or TRITON™ X 114 wherein the number of ethoxy units is about 7 to 8. Still further examples include those in which R¹ in the above formula (VI) represents an alkyl group of 4 to 20 carbon atoms, m is 0 and R³ is hydrogen. An example thereof includes isotridecanol ethoxylated with about 8 ethoxy groups and which is commercially available as GENAPOL®X080 from Clariant GmbH. Non-ionic surfactants according to formula (VI) in which the hydrophilic part comprises a block-copolymer of ethoxy groups and propoxy groups may be used and well. Such non-ionic surfactants are commercially available from Clariant GmbH under the trade designation GENAPOL® PF 40 and GENAPOL® PF 80.

The amount of fluoropolymer solids in the dispersion may be upconcentrated as needed or desired to an amount between 30 and 70% by weight. Any of the known upconcentration techniques may be used including ultrafiltration and thermal upconcentration.

Notwithstanding the presence of the oligomer, which has a combination of repeating units different from the combination of repeating units in the fluoropolymer, in the dispersion, the obtained fluoropolymer may be conveniently used in most applications optionally after the addition of non-ionic surfactant and/or upconcentration and without removing the oligomer. Also despite the fact that the combination of repeating units is different from that of the fluoropolymer, generally does not adversely affect the properties and application of the fluoropolymer and compositions based thereon.

Nevertheless, for certain applications it may nevertheless be desirable to remove the oligomer from the dispersion. Also, to minimize costs, it will generally be advantageous to recover the oligomer from the aqueous dispersions. It has been found that the oligomer can be readily removed from the aqueous dispersion using an anion exchange resin. Accordingly, a non-ionic surfactant, e.g. as disclosed above is added to the fluoropolymer dispersion, generally in an amount of 1 to 12% by weight and the fluoropolymer dispersion is then contacted with an anion exchange resin. Such a method is disclosed in detail in WO 00/35971. The anion exchange process is preferably carried out in essentially basic conditions. Accordingly, the ion exchange resin will preferably be in the OH- form although anions like fluoride or sulfate may be used as well. The specific basicity of the ion exchange resin is not very critical. Strongly basic resins are preferred because of their higher efficiency. The process may be carried out by feeding the fluoropolymer dispersion through a column that contains the ion exchange resin or alternatively, the fluoropolymer dispersion may be stirred with the ion exchange resin and the fluoropolymer dispersion may thereafter be isolated by filtration. The oligomer may subsequently be recovered from the anion exchange resin by eluting the loaded resin. A suitable mixture for eluting the anion exchange resin is a mixture of ammonium chloride, methanol and water.

### EXAMPLES

### Test Methods:

The melt flow index (MFI) was carried out according to DIN 53735, ISO 12086 or ASTM D- 1238 at a support weight of 5.0 kg and a temperature of 265°C or 297°C alternatively. The MFIs cited here were obtained with a standardized extrusion die of 2.1 mm diameter and a length of 8.0 mm.

Melting peaks of the fluororesins were determined according to ASTM 4591 by means of Perkin-Elmer DSC 7.0 under nitrogen flow and a heating rate of 10°C/min. The indicated melting points relate to the melting peak maximum.

The latex particle size determination was conducted by means of dynamic light scattering with a *Malvern Zetazizer 1000 HSA* in accordance to ISO/DIS 13321. Prior to the measurements, the polymer latexes as yielded from the polymerisations were diluted with 0.001 mol/L KCl-solution, the measurement temperature was 20°C in all cases.

Determination of solid content was carried out subjecting the sample to a temperature up to 250°C for 30 min.

¹⁹F nuclear magnetic resonance (NMR) spectra were recorded with a *Bruker Avance 400* (400 MHz) instrument, 5000 scans per measurement were usually applied.

Molecular weight characterization of the water soluble telomer products was cunducted by means of electro spray ionization mass spectrometry (ESI-MS). The various telomers were separated by the molecular weight using a HPLC-device consisting of an Agilent HP 1100 instument (consisting of a degazer G1322A, binary pump G1312A, auto sample G1313A, column ovenG1316A, column Thermo Betasil C18, 5µm, 2.1*50 mm and a capillary ID 0.17 mm). The conditions for the HPLC device have been the following: 0.3 ml/min constant flow rate, column temperature: 30°C, injection volume: 5µl, run time: 20 min, solvent A: aqueous ammonium acetate solution (0.002 mol/l), solvent B:methanol (gradient grade). The solvent gradient applied was:

| Time [min] | A[%] | B[%] | Flow[ml/min] |
|---|---|---|---|
| 0.00 | 90.00 | 10.00 | 0.300 |
| 1.00 | 90.00 | 10.00 | 0.300 |
| 11.00 | 0.00 | 100.00 | 0.300 |
| 16.00 | 0.00 | 100.00 | 0.300 |
| 18.00 | 90.00 | 10.00 | 0.300 |

The spray injection was accomplished using a Harvard Apparatus 11 Plus pump equipped with a Hamilton Gastight #101 syringe (1000 µl). A flow rate of 20 µl/min at 30°C and a run time of 10 min after injection have been applied. Mass detection of the telomers was accomplished by a Micromass Quattro 2 equipped with a ESI-MS interface (operating in negative ion mode). The settings of the ESI-MS device were further fine tuned so that molecular masses can be resolved in a mass range of 50-1050 Daltons in direct infusion and 100-800 Daltons in liquid chromatography coupled with mass spectroscopy. The raw data collection and analysis was conducted using the MassLynx Ver. 3.4 software.

### Example 1 (preparation of VDF-HFP oligomer having ionic end groups)

A polymerization kettle with a total volume of 47.51 equipped with an impeller agitator system was charged with 22.01 deionized water. The oxygen free kettle was then heated up to 90° C and the agitation system was set to 240 rpm. The kettle was charged with 202 g dimethylether (Me₂O), 200 g hexafluoropropylene (HFP) to a pressure of 2.5 bar absolute and with 85 g vinylidenefluoride (VDF) to 4.0 bar absolute reaction pressure. The polymerization was initiated by the addition of 130 ml 31% aqueous ammonium peroxodisulfate (APS) solution. As the reaction starts, the reaction temperature was maintained and the reaction pressure of 4.0 bar absolute was maintained by the feeding VDF and HFP into the gas phase with a feeding ratio HFP (kg)/VDF (kg) of 0.653. Additionally, a 31 % aqueous ammonium peroxodisulfate (APS) solution was continuously fed into the reactor with a feed rate of 130 ml/h. When a total feed of 50g VDF was reached in 240 min, the feed of the APS solution as well as the feed of the monomers was interrupted by closing the monomer valves. Then the reactor was vented and flushed with N₂ in three cycles.

The so-obtained aqueous solution with a solid content of 0.9% was recovered at the bottom of the reactor. The yellow solution only shows minor turbidity, the present particles are showing 148 nm in diameter according to dynamic light scattering. These particles show a low colloidal stability. After two days however, they can be removed from the aqueous phase by simple filtration. The remaining translucent solution has a high tendency of foaming and shows a surface tension of 37.0 mN/m.

The aqueous reaction product was analyzed in terms of the content of fluorinated water soluble components by means of ¹⁹F NMR spectroscopy. As an internal standard, 0.1355 g of trifluoroethanol (F₃C-CH₂OH) was added to 0.9895 g of the aqueous reaction product. The obtained signal intensities (against D₂O) are summarised in Table 1.

**Table 1**

| **¹⁹F signal location** | **Possible structural assignment** | **signal intensity** |
|---|---|---|
| -72 ppm | F₃C- of HFP | 0.062 |
| -74,4 ppm | F₃C- of internal standard | 99.287 |
| -90.5 ppm (doublet) | -CH₂-CF₂-CH₂- of VDF | 0.153 |
| -101 to -102 ppm | -CH₂-CF₂-CF(CF₃)- of VDF | 0.112 |
| -112 to -113 ppm | -CH₂-CF₂-H of VDF | 0.159 |
| -125 ppm | -CH₂-CF₂-CF₂-CF(CF₃)- of HFP | 0.059 |

Using the ¹⁹F NMR signals summarized in Table 1, it can be calculated that the obtained water soluble telomer products have a chemical composition of 88 mol% VDF and 12 mol% HFP. Further from the NMR data a number average degree of polymerization of Pₙ ≈ 3.3 was calculated. Using the signal intensity of the internal standard, it is further calculated that about 17 g of telomer products has been formed.

The obtained oligomer was subjected to liquid chromatography coupled with a mass spectroscope. The resulting mass spectrum is summarized in table 2.

**Table 2**

| **structural assignment** | **experimental mass [g/mol]** | **calculated mass [g/mol]** | **relative abundance [%]** |
|---|---|---|---|
| ^{⊖}OSO₃-(VDF)₁-(HFP)₀-H | 160.84 | 160.97 | 72 |
| ^{⊖}OSO₃-(VDF)₂-(HFP)₀-H | 224.86 | 224.98 | 100 |
| ^{⊖}OSO₃-(VDF)₃-(HFP)₀-H | 288.88 | 288.99 | 41 |
| ^{⊖}OSO₃-(VDF)₁-(HFP)₁-H | 310.86 | 310.96 | 5 |
| ^{⊖}OSO₃-(VDF)₄-(HFP)₀-H | 352.91 | 353.01 | 24 |
| ^{⊖}OSO₃-(VDF)₂-(HFP)₁-H | 374.89 | 374.97 | 4 |
| ^{⊖}OSO₃-(VDF)₅-(HFP)₀-H | 416.88 | 417.02 | 9 |
| ^{⊖}OSO₃-(VDF)₃-(HFP)₁-H | 438.86 | 438.99 | 3 |
| ^{⊖}OSO₃-(VDF)₆-(HFP)₀-H | 480.91 | 481.03 | 5 |
| ^{⊖}OSO₃-(VDF)₄-(HFP)₁-H | 502.83 | 503.00 | 1.5 |
| ^{⊖}OSO₃-(VDF)₇-(HFP)₀-H | 544.88 | 545.05 | 2 |

### Example 2 (polymerization of TFE/HFP/VDF using the oligomer of example 1)

24 l deionized water containing 5 l emulsifier solution, as prepared in example 1, are fed in a 50 l polymerization vessel. Air was removed by alternating evacuation and pressurizing with nitrogen up to 4 bar. Then the vessel is pressurized with 8.6 bar HFP, 1.9 bar VDF and 4.2 bar TFE. The temperature in the vessel is adjusted to 70°C. 200 ml aqueous solution containing 9 g of ammonium persulfate (APS) was charged into the vessel. The speed of agitation was 240 rpm. Polymerization temperature and pressure are kept constant by feeding TFE, HFP and VDF in a constant ratio of 1 : 0.412 : 0.488. When 0.8 kg TFE are consumed, polymerization is stopped by closing the monomer-feeding and lowering the speed of agitation. The vessel is vented and the resulting dispersion discharged. The thus obtained dispersion has a solid content of 5 % and particle size of about 152 nm.

The resulting THV polymer had a MFI (265°C/5kg load) of 500 g/10min. The melting points were as follows: 155°C/153°C/159°C (first heat up/cool down/ second heat up).

### Example 3 (Polymerization with in-situ prepared oligomer)

28 l deionized water are fed in a 50 1 polymerization vessel. Air was removed by alternating evacuation and pressurizing with nitrogen up to 4 bar. Then the vessel is pressurized with 5.0 bar HFP, 3.5 bar VDF and 0.8 bar ethane. The temperature in the vessel is adjusted to 70°C. 200 ml aqueous solution containing 12 g APS, 22 mg CuSO₄ . 5 H₂O and 150 g 10% aqueous NaOH solution was charged into the vessel. The reaction is initiated by pumping in the vessel an aqueous solution containing 3 g Na₂S₂O₅ dissolved in 100 ml deionized water. The speed of agitation is 240 rpm. The temperature is kept constant without feeding of monomers. When the pressure has dropped by 1.5 bar, about 100g of oligomer had formed. Then the vessel is pressurized with 8.5 bar TFE to initiate the polymerization to produce the fluoropolymer of TFE, HFP and VDF (THV polymer). Polymerization temperature and pressure are kept constant by feeding TFE, HFP and VDF in a constant ratio of 1:0.412:0.488. When 2.5 kg TFE are consumed, polymerization is stopped by closing the monomer-feeding and lowering the speed of agitation. The vessel is vented and the resulting dispersion discharged. The thus obtained dispersion has a solid content of 13% and particle size of about 231 nm.

The resulting THV polymer had a MFI (265°C/5kg load) of 40 g/10min. The melting points were as follows: 146°C/135°C/153°C (first heat up/cool down/ second heat up).

## Claims

1. Method for making a fluoropolymer comprising an aqueous emulsion polymerization of one or more fluorinated monomers wherein said aqueous emulsion polymerization is carried out in the presence of an oligomer as an emulsifier, therein said oligomer comprises one or more ionic groups, has a partially fluorinated backbone and a number average molecular weight of not more than 2000 g/mol and has a combination of repeating units that is different from that of the fluoropolymer that is being produced by the polymerization of said one or more fluorinated monomers and wherein the oligomer is obtainable by a free radical oligomerization of one or more fluorinated monomers having a partially fluorinated unsaturation and one or more perfluorinated monomers.

2. Method according to claim 1 wherein an end group of said oligomer comprises an ionic group.

3. Method according to claim 1 wherein said one or more partially fluorinated monomers correspond to the general formula:
CX₂=CXY
wherein each independent X represents H, F or CF₃, Y represents H, F or a perfluorinated hydrocarbon group that may have one or more oxygen atoms, with the proviso that at least one X or Y represents H and at least one X or Y represents F.

4. Method according to claim 1 wherein the oligomer further comprises one or more repeating units of a perfluorinated monomer.

5. Method according to claim 4 wherein said oligomer comprises repeating units deriving from tetrafluoroethylene, vinylidene fluoride, vinyl fluoride, trifluoroethylene, hexafluoropropylene or a combination thereof in which at least one of the units derives from a partially fluorinated monomer.

6. Method according to claim 1 wherein the ionic groups comprise a carboxylic acid or salt thereof.

7. Method according to claim 1 wherein said one or more fluorinated monomers for making said fluoropolymer are selected from the group of perfluorinated monomers so as to obtain a perfluorinated fluoropolymer.

8. Method according to claim 1 wherein the method is carried out so as to produce a semicrystalline fluoropolymer having an MFI of 100 g/10 min. or less.

9. Aqueous dispersion comprising a fluoropolymer and an oligomer that comprises one ore more ionic groups, has a partially fluorinated backbone, a number average molecular weight of not more than 2000 g/mol, and has a combination of repeating units that is different from that of the fluoropolymer and that is obtainable by a free radical oligomerizaton of one or more fluorinated monomers having a partially fluorinated unsaturation and one or more perfluorinated monomers.

10. Aqueous dispersion according to claim 9 wherein said fluoropolymer is a perfluorinated polymer.

11. Aqueous dispersion according to claim 9 wherein the amount of fluoropolymer solids is between 30 and 70 % by weight.

12. Aqueous dispersion according to claim 9 wherein the dispersion is free of perfluoroalkanoic acids or salts thereof that have between 6 and 12 carbon atoms.

13. Aqueous dispersion according to claim 9 further comprising a non-ionic surfactant in an amount of 1 to 12% by weight based on fluoropolymer solids.

14. Aqueous dispersion according to claim 9 wherein said fluoropolymer is a semicrystalline fluoropolymer having an MFI of 100 g/10min.or less.

## Patentansprüche

1. Verfahren zur Herstellung eines Fluorpolymers, umfassend eine wäßrige Emulsionspolymerisation eines oder mehrerer fluorierter Monomere, bei dem man die wäßrige Emulsionspolymerisation in Gegenwart eines Oligomers als Emulgator durchführt, wobei das Oligomer eine oder mehrere ionische Gruppen umfaßt, eine teilfluorierte Hauptkette und ein zahlenmittleres Molekulargewicht von höchstens 2000 g/mol aufweist und eine Kombination von Wiederholungseinheiten, die von derjenigen des durch die Polymerisation des bzw. der fluorierten Monomere hergestellten Fluorpolymers verschieden ist, aufweist und wobei das Oligomer durch radikalische Oligomerisation eines oder mehrerer fluorierter Monomere mit teilfluorierter Ungesättigtheit und eines oder mehrerer perfluorierter Monomere erhältlich ist.

2. Verfahren nach Anspruch 1, bei dem eine Endgruppe des Oligomers eine ionische Gruppe umfaßt.

3. Verfahren nach Anspruch 1, bei dem das bzw. die teilfluorierten Monomere der allgemeinen Formel:
CX₂=CXY
entsprechen, wobei jedes unabhängige X für H, F oder CF₃ steht, Y für H, F oder eine perfluorierte Kohlenwasserstoffgruppe, die ein oder mehrere Sauerstoffatome aufweisen kann, steht, mit der Maßgabe, daß mindestens einer der Reste X oder Y für H steht und mindestens einer der Reste X oder Y für F steht.

4. Verfahren nach Anspruch 1, bei dem das Oligomer ferner eine oder mehrere Wiederholungseinheiten eines perfluorierten Monomers umfaßt.

5. Verfahren nach Anspruch 4, bei dem das Oligomer Wiederholungseinheiten umfaßt, die sich von Tetrafluorethylen, Vinylidenfluorid, Vinylfluorid, Trifluorethylen, Hexafluorpropylen oder einer Kombination davon, in der sich mindestens eine der Einheiten von einem teilfluorierten Monomer ableitet, ableiten.

6. Verfahren nach Anspruch 1, bei dem die ionischen Gruppen eine Carbonsäure oder ein Salz davon umfassen.

7. Verfahren nach Anspruch 1, bei dem man das bzw. die fluorierten Monomere zur Herstellung des Fluorpolymers aus der Gruppe der perfluorierten Monomere auswählt, um ein perfluoriertes Fluorpolymer zu erhalten.

8. Verfahren nach Anspruch 1, das man so durchführt, daß sich ein teilkristallines Fluorpolymer mit einem MFI von 100 g/10 min oder weniger ergibt.

9. Wäßrige Dispersion, umfassend ein Fluorpolymer und ein Oligomer, das eine oder mehrere ionische Gruppen umfaßt, eine teilfluorierte Hauptkette und ein zahlenmittleres Molekulargewicht von höchstens 2000 g/mol aufweist und eine Kombination von Wiederholungseinheiten, die von derjenigen des Fluorpolymers verschieden ist, aufweist und das durch radikalische Oligomerisation eines oder mehrerer fluorierter Monomere mit teilfluorierter Ungesättigtheit und eines oder mehrerer perfluorierter Monomere erhältlich ist.

10. Wäßrige Dispersion nach Anspruch 9, wobei es sich bei dem Fluorpolymer um ein perfluoriertes Polymer handelt.

11. Wäßrige Dispersion nach Anspruch 9, wobei die Menge an Fluorpolymer-Feststoffen zwischen 30 und 70 Gew.-% liegt.

12. Wäßrige Dispersion nach Anspruch 9, die frei von Perfluoralkansäuren oder Salzen davon mit zwischen 6 und 12 Kohlenstoffatomen ist.

13. Wäßrige Dispersion nach Anspruch 9, ferner umfassend ein nichtionisches Tensid in einer Menge von 1 bis 12 Gew.-%, bezogen auf Fluorpolymer-Feststoffe.

14. Wäßrige Dispersion nach Anspruch 9, wobei es sich bei dem Fluorpolymer um ein teilkristallines Fluorpolymer mit einem MFI von 100 g/10 min oder weniger handelt.

## Revendications

1. Méthode de fabrication d'un fluoropolymère comprenant une polymérisation en émulsion aqueuse d'un ou plusieurs monomères fluorés, **caractérisée en ce que** ladite polymérisation en émulsion aqueuse est effectuée en présence d'un oligomère en tant qu'émulsifiant, **en ce que** ledit oligomère comprend un ou plusieurs groupements ioniques, a un squelette partiellement fluoré et un poids moléculaire moyen en nombre inférieur ou égal à 2000 g/mole et a une combinaison de motifs de répétition qui est différente de celle du fluoropolymère produit par la polymérisation dudit ou desdits un ou plusieurs monomères fluorés, et **en ce que** l'oligomère est susceptible d'être obtenu par une oligomérisation radicalaire d'un ou plusieurs monomères fluorés ayant une insaturation partiellement fluorée et un ou plusieurs monomères perfluorés.

2. Méthode selon la revendication 1, **caractérisée en ce qu'**un groupement terminal dudit oligomère comprend un groupement ionique.

3. Méthode selon la revendication 1, **caractérisée en ce que** ledit ou lesdits un ou plusieurs monomères partiellement fluorés correspondent à la formule générale :
CX₂=CXY
dans laquelle chaque X indépendant représente H, F ou CF₃, Y représente H, F ou un groupement hydrocarboné perfluoré qui peut avoir un ou plusieurs atomes d'oxygène, à condition qu'au moins un X ou Y représente H et au moins un X ou Y représente F.

4. Méthode selon la revendication 1, **caractérisée en ce que** l'oligomère comprend en outre un ou plusieurs motifs de répétition d'un monomère perfluoré.

5. Méthode selon la revendication 4, **caractérisée en ce que** ledit oligomère comprend des motifs de répétition issus de tétrafluoroéthylène, de fluorure de vinylidène, de fluorure de vinyle, de trifluoroéthylène, d'hexafluoropropylène ou d'une combinaison de ceux-ci dans laquelle au moins un motif provient d'un monomère partiellement fluoré.

6. Méthode selon la revendication 1, **caractérisée en ce que** les groupements ioniques comprennent un acide carboxylique ou un sel de celui-ci.

7. Méthode selon la revendication 1, **caractérisée en ce que** ledit ou lesdits un ou plusieurs monomères fluorés pour la fabrication desdits fluoropolymères sont choisis dans le groupe de monomères perfluorés de manière à obtenir un fluoropolymère perfluoré.

8. Méthode selon la revendication 1, **caractérisée en ce que** la méthode est effectuée de manière à produire un fluoropolymère semicristallin ayant une valeur MFI de 100 g/10 min ou moins.

9. Dispersion aqueuse comprenant un fluoropolymère et un oligomère qui comprend un ou plusieurs groupements ioniques, a un squelette partiellement fluoré, un poids moléculaire moyen en nombre inférieur ou égal à 2000 g/mole, et a une combinaison de motifs de répétition qui est différente de celle du fluoropolymère, et qui est susceptible d'être obtenu par une oligomérisation radicalaire d'un ou plusieurs monomères fluorés ayant une insaturation partiellement fluorée et un ou plusieurs monomères perfluorés.

10. Dispersion aqueuse selon la revendication 9, **caractérisée en ce que** ledit fluoropolymère est un polymère perfluoré.

11. Dispersion aqueuse selon la revendication 9, **caractérisée en ce que** la quantité de matières solides de fluoropolymère est comprise entre 30 et 70 % en poids.

12. Dispersion aqueuse selon la revendication 9, **caractérisée en ce que** la dispersion est dépourvue d'acides perfluoroalcanoïques ou de sels de ceux-ci qui ont entre 6 et 12 atomes de carbone.

13. Dispersion aqueuse selon la revendication 9, comprenant en outre un tensioactif non ionique dans une quantité de 1 à 12 % en poids sur la base des matières solides de fluoropolymère.

14. Dispersion aqueuse selon la revendication 9, **caractérisée en ce que** ledit fluoropolymère est un fluoropolymère semicristallin ayant une valeur de MFI de 100 g/10 min ou moins.
